# EUROPÄISCHE PATENTSCHRIFT

(11) **EP 2 514 488 B1**
(45) Veröffentlichungstag und Bekanntmachung des Hinweises auf die Patenterteilung: **26.09.2018**
(21) Anmeldenummer: 12154638.6
(22) Anmeldetag: 09.02.2012
(51) Int. Cl.: A62C 2/06, E04C 2/52, H02G 3/04, H02G 3/22, F16L 5/04

(54) **Komprimierbares Weichschott, Verfahren zu seiner Herstellung und seine Verwendung**
Compressible soft seal, method for its manufacture and application
Cloison souple comprimable, son procédé de fabrication et d'utilisation

(30) Priorität: 19.04.2011 DE 102011007654
(43) Veröffentlichungstag der Anmeldung: 24.10.2012
(73) Patentinhaber: HILTI Aktiengesellschaft, 9494 Schaan (LI)
(72) Erfinder: Sander, Sebastian, 86899 Landsberg (DE); Münzenberger, Herbert, 65191 Wiesbaden (DE)
(74) Vertreter: Hilti Aktiengesellschaft Corporate Intellectual Property

(56) Entgegenhaltungen:
- DE-A1-102005 044 052
- DE-U1-202006 004 488
- DE-U1-202006 011 374

## Beschreibung

Die vorliegende Erfindung betrifft ein komprimierbares Weichschott mit einem Kern aus einer Mineralfaserplatte und funktionellen Deckschichten in Form einer ablativen und/oder intumeszierenden Beschichtung auf mindestens einer der großen Oberfläche der Mineralfaserplatte, das Verfahren zur Herstellung dieses Weichschotts und seine Verwendung zur brandsicheren Abschottung von Rohr- und Kabeldurchführungen in Wänden, Decken und Böden von Gebäuden.

Das sogenannte Weichschott ist eine klassische Einrichtung zur brandsicheren Abschottung von Rohr- und Kabeldurchführungen in Wänden, Decken und Böden von Gebäuden. Solche Brandschutzsysteme, die einen Kern aus einer Mineralfaserplatte und funktionellen Deckschichten in Form einer ablativen und/oder intumeszierenden Beschichtung auf mindestens einer der großen Oberflächen der Mineralfaserplatte aufweisen, haben fast alle europäischen Anbieter von Brandschutzprodukten im Programm.

Ein solches herkömmliches "Weichschott" ist eigentlich sehr hart, denn es besteht aus Mineralfaserplatten mit einer Dichte von 140 bis 190 kg/m³. Es weist eine funktionelle Deckschicht auf, die bei handelsüblichen Systemen aus ablativen und/oder intumeszierenden Beschichtungen besteht. Je nach Zulassung bzw. System sind die Mineralfaserplatten ein- oder beidseitig durch den Hersteller vorbeschichtet oder müssen nach dem Einbau entsprechend beschichtet werden. In Deutschland, England und Österreich werden bis zu 70 % der Kabeldurchführungen mit diesen Systemen abgeschottet.

Die Materialkosten für diese Schotts sind sehr niedrig, allerdings sind komplexe Durchführungen mit mehreren Kabeltrassen und Rohren sehr arbeitsaufwendig in der Anbringung. Die Bauteillaibungen, Rohre, Kabeltrassen, Kabel und alle Schnittkanten, auch die von kleinen Passstücken, müssen mit der ablativen oder intumeszierenden Beschichtungsmasse eingestrichen werden. Diese Verfahrensweise ist daher bei den Verarbeitern sehr wenig beliebt. Weiterhin müssen die Passstücke sehr genau zugeschnitten werden, da die Platten nur wenig komprimierbar sind und sich bei zu starkem Verpressen die Beschichtung von der Oberfläche lösen kann.

Ein wesentliches Problem bei solchen vorbeschichteten Mineralfaserplatten ist in der schlechten Haftung des getrockneten Films aus der ablativen und/oder intumeszierenden Beschichtung auf der Mineralfaserplatte zu sehen. Dies beruht darauf, dass bei allen handelsüblichen Brandschutzplatten dieser Art die Beschichtung der Orientierung der in der Regel parallel zueinander ausgerichteten Mineralfasern folgt.

Es wurde nunmehr von der Anmelderin gefunden, dass bei den angewandten Dichten der Mineralfaserplatten von 140 bis 190 kg/m³ bei den herkömmlichen Weichschotts dieser Art die Oberfläche der Mineralfasern derart dicht ist, dass die ablative und/oder intumeszierende Beschichtung nicht eindringen und sich dort nicht ausreichend verankern kann. Beim Zuschneiden der in dieser Weise beschichteten Weichschotts trennt sich daher die oberste Lage der Mineralfasern mit der Beschichtung sehr leicht von dem Rest der Mineralfaserplatte.

Eine gewisse Verbesserung von solchen Brandschutzplatten ergibt sich aus der deutschen Offenlegungsschrift DE 10 2005 044 052 A1, aus der ein Bauelement für eine Gebäudewand oder ein Gebäudedach bekannt ist, bestehend aus zumindest einer Deckschicht und einem Dämmstoffelement aus Mineralfasern, vorzugsweise aus Steinwolle, in Form einer Platte oder einer Bahn, das zwei große Oberflächen aufweist, die im Abstand zueinander verlaufend angeordnet sind, wobei die Deckschicht auf einer großen Oberfläche angeordnet ist und wobei das aus einer mäandrierend abgelegten Mineralfaserbahn ausgebildete Dämmstoffelement Stege ausbildet, die im Wesentlichen rechtwinklig zu den großen Oberflächen ausgerichtet und im Bereich einer großen Oberfläche über Umlenkungsbereiche miteinander verbunden sind, wobei die Mineralfasern in den Stegen rechtwinklig und in den Umlenkungsbereichen schräg bis parallel zu den großen Oberflächen des Dämmstoffelements verlaufen, wobei die Oberfläche des Dämmstoffelements mit dem überwiegend rechtwinkligen Verlauf der Mineralfasern an die Deckschicht angrenzt.

Auch dieses Bauelement vermag nicht vollständig zu befriedigen, weil im Fall einer beidseitigen Beschichtung mit der Deckschicht die Beschichtung der zweiten großen Oberfläche wiederum der Orientierung der Mineralfasern folgt, sodass sich auf dieser Seite des vorbekannten Bauelements die gleichen Probleme, wie sie oben angesprochen worden sind, ergeben, nämlich eine Neigung zur Ablösung der Beschichtung mit den entsprechenden Folgen für die Verarbeitung und den Einbau.

Gebrauchsmusterschrift DE 20 2006 004 488 U1 offenbart ein Mineralfaserschott dass eine Mineralfaserplatte aufweist. Die Mineralfaserplatte kann auf ihrer Außenseite eine Beschichtung aufweisen, die beispielsweise einen Dämmschichtbildner und/oder eine wärmeabsorbierende Schicht umfassen kann.

Die Aufgabe der vorliegenden Erfindung besteht nun darin, ein verbessertes komprimierbares Weichschott der eingangs angegebenen Gattung bereitzustellen, bei dem sich die funktionellen Deckschichten beim Schneiden nicht ablösen, bei dem die Schnittkanten für den Einbau nicht beschichtet werden müssen und bei dem Zuschnitte sich leicht den Konturen von Kabeln und Kabeltrassen anpassen lassen.

Es hat sich überraschenderweise gezeigt, dass sich diese Aufgabe dadurch lösen lässt, wenn als Basis eine leicht komprimierbare Mineralfaserplatte mit einer Dichte von weniger als 100 kg/m³ eingesetzt wird, die gegen die Orientierung der Mineralfasern mit der ablativen und/oder intumeszierenden Beschichtung versehen wird.

Gegenstand der Erfindung ist daher das komprimierbare Weichschott gemäß Anspruch 1. Die Unteransprüche betreffen bevorzugte Ausführungsformen dieses komprimierbaren Weichschotts, ein Verfahren zu seiner Herstellung und seine Verwendung.

Die Erfindung betrifft somit ein komprimierbares Weichschott mit einem Kern aus einer Mineralfaserplatte und funktionellen Deckschichten in Form einer ablativen und/oder intumeszierenden Beschichtung auf mindestens einer der großen Oberflächen der Mineralfaserplatte, das dadurch gekennzeichnet ist, dass die Mineralfasern der Mineralfaserplatte im Wesentlichen parallel zueinander und senkrecht zur Ebene der großen Oberflächen der Mineralfaserplatte angeordnet sind, dass die Mineralfaserplatte eine Dichte von weniger als 100 kg/m³ aufweist und dass die funktionellen Deckschichten aus einem ablative und/oder intumeszierende Additive enthaltenden verbundbildenden Träger gebildet sind, in den die Enden der Mineralfasern eingebettet sind.

Das Merkmal, dass die Mineralfasern der Mineralfaserplatte im Wesentlichen parallel zueinander und senkrecht zur Ebene der großen Oberflächen der Mineralfaserplatte angeordnet sind, bedeutet vorzugsweise, dass die Mineralfasern der Mineralfaserplatte gestreckt neben- und übereinander vorliegen und die Hauptachsen der Mineralfasern in einem Bereich von 90 ± 20° zur Ebene der großen Oberflächen der Mineralfaserplatte verlaufen.

Vorzugsweise besitzt die Mineralfaserplatte vor der Beschichtung eine Dichte von 50 bis 90 kg/m³, vorzugsweise von 60 kg/m³.

Gemäß einer bevorzugten Ausführungsform sind die funktionellen Deckschichten aus einem verbundbildenden Träger ausgewählt aus der Polyurethane, Phenolharze, Polystyrole, Polyolefine, wie Polyethylen und/oder Polybutylen, Melaminharze, Melaminharzschäume, synthetischen oder natürlichen Kautschuk, Cellulose, Elastomere und Gemische davon umfassenden Gruppe gebildet. In besonders bevorzugter Weise umfassen die funktionellen Deckschichten als verbundbildenden Träger einen Polyurethanschaum auf der Grundlage einer Polyolkomponente, einer Polyisocyanatkomponente, eines oder mehrerer Katalysatoren für die Reaktion des Polyols mit dem Polyisocyanat und eines chemischen Treibmittels und/oder physikalischen Treibmittels. Der verbundbildende Träger der funktionellen Deckschichten besteht noch bevorzugter aus einem flexiblen Polyurethanschaum und am bevorzugtesten aus einem flexiblen Polyurethanweichschaum.

Der verbundbildende Träger der funktionellen Deckschichten enthält als ablatives Additiv, eine anorganische Verbindung, die Wasser z.B. als Kristallwasser fest eingelagert hat und bei Temperaturen bis 100°C nicht austrocknet, dieses aber im Brandfall ab 120°C freisetzt und dadurch temperaturführende Teile kühlen kann, vorzugsweise ein bei der Brandtemperatur bzw. bei Beflammung wasserabgebendes anorganisches Hydroxid oder Hydrat, insbesondere Aluminiumhydroxid, Aluminiumoxidhydrate oder teilhydratisierte Aluminiumhydroxide. Es kommen aber auch andere, bei der im Beflammung wasserabgebende anorganische Hydroxide oder Hydrate in Betracht, wie sie in der EP 0 274 068 A2 beschrieben sind, z.B. Borsäure und deren teilentwässerte Derivate, ferner CaO·Al₂O₃·10H₂0 (Nesquehonit), MgCO₃·3H₂0 (Wermlandilt), Ca₂Mg₁₄(Al,Fe)₄CO₃(OH)·29H₂O (Thaumasit), Ca₃Si(OH)₆(SO₄)(CO₃)·12H₂0 (Artinit), Mg₂(OH)₂C0₃·H₂0 (Ettringit), 3 CaO.Al₂0₃.·3 CaSO₄·32H₂0 (Hydromagnesit), Mg₅(OH)₂(C0₃)₄·4H₂0 (Hydrocalumit), Ca₄AlOH)_{I4}·6H₂0) (Hydrotalkit), Mg₆Al₂(OH)₁₆C0₃·4H₂0 (Alumohydrocalcit), CaAl₂(OH)₄(CO₃)₂·3H₂0 (Scarbroit), Al₁₄(CO₃)₃(OH)₃₆ (Hydrogranat), 3CaO·Al₂O₃·6H₂0 (Dawsonit), NaAl(OH)CO₃, CaSO₄·2H₂0 (Gips), wasserhaltige Zeolithe, Vermikulite, Zinkborat, Colemanit, Perlite, Glimmer, Alkalisilikate, Borax, modifizierte Kohlen und Graphite und Kieselsäuren.

Gemäß einer weiteren bevorzugten Ausführungsform enthalten die funktionellen Deckschichten als intumeszierendes Additiv, das heißt ein Additiv, welches im Brandfall, also unter Hitzeeinwirkung aufschäumt und dabei einen die Flammenausbreitung hindernden Schaum ausbildet, ein intumeszierendes Material auf der Grundlage eines Säurebildners, einer Kohlenstoff liefernden Verbindung und eines Gasbildners. Vorzugsweise umfasst das intumeszierende Material als Säurebildner, ein Salz oder ein Ester einer anorganischen, nichtflüchtigen Säure ausgewählt aus Schwefelsäure, Phosphorsäure und Borsäure, als Kohlenstoff liefernde Verbindung eine Polyhydroxyverbindung und/oder ein thermoplastisches oder duroplastisches polymeres Harzbindemittel und als Gasbildner ein Chlorparaffin, Melamin, eine Melaminverbindung, insbesondere Melamincyanurat, Melaminphosphat, Melaminpolyphosphat, Tris(hydroxyethyl)-cyanurat, Cyanamid, Dicyanamid, Dicyandiamid, Biguanidin und/oder ein Guanidinsalz, insbesondere Guanidinphosphat oder Guanidinsulfat.

Gemäß einer weiteren Ausführungsform der Erfindung kann der verbundbildende Träger der funktionellen Deckschichten als intumeszierendes Additiv oder in Kombination mit dem intumeszierenden Material auf der Grundlage eines Säurebildners, einer Kohlenstoff liefernden Verbindung und eines Gasbildners Blähgraphit, Perlit, ein wasserhaltiges Alkalisilikat und/oder Vermiculit enthalten.

Gemäß einer bevorzugten Ausführungsform enthalten die funktionellen Deckschichten 2 bis 50 Gew.-%, bevorzugter 5 bis 40 Gew.-% des ablativen und/oder intumeszierenden Additivs, bezogen auf die Gesamtmasse der funktionellen Deckschichten.

Zur weiteren Steigerung der Brandschutzwirkung ist es erfindungsgemäß möglich, in die funktionellen Deckschichten 0 bis 30 Gew.-%, bevorzugter 10 bis 35 Gew.-%, mindestens eines Matrixstabilisators, bezogen auf die Gesamtmasse der funktionellen Deckschichten, einzubringen. Als Matrixstabilisator enthält der verbundbildenden Träger vorzugsweise einen anorganischen Füllstoff und/oder einen bei der Brandtemperatur verkohlenden, verglasenden, keramisierenden und/oder endotherm abreagierenden Stoff. Zu den verkohlenden und damit ein Kohlenstoffgerüst bildenden Stoffen gehören Kohlenhydrate, namentlich Mono-, Di- oder Polysaccharide, wie Zucker, Stärke, Cellulose, Pentaerythrit, gegebenenfalls im Zusammenwirken mit Salzen starke anorganische Säuren, wie der Phosphorsäure oder Schwefelsäure und/oder der entsprechenden Polysäuren. Typische verglasende bzw. keramisierende Stoffe, die bei der Brandtemperatur möglichst an der erhitzten Oberfläche, dann aber im gesamten Volumen der Masse diese Eigenschaften aufweisen, sind Alkalisilikate, Alkalialumosilikate, Alkalimagnesiasilikate, Phosphate, phosphathaltige Silikate bzw. Aluminate, organische oder anorganische Borverbindungen und Gemische von bei der Brandtemperatur verglasenden bzw. keramisierenden Stoffen.

Als Matrixstabilisator haben sich auch Stoffe als geeignet erwiesen, die bei der Brandtemperatur gegebenenfalls zusammen mit Antimonverbindungen, wie Antimontrichlorid oder -oxid antikatalytisch brandhemmende und/oder unbrennbare Gase bilden, beispielsweise halogenhaltige Verbindungen, wie Chlorkohlenwasserstoffe, und/oder Kohlendioxid abspaltende Verbindungen, wie Carbonate, Stickstoff abspaltende Verbindungen, wie Azocarbonamid, organische Hydrazide, beispielsweise Arylsulfonsäurehydrazide, Hexamethylentetramid, Guanidin oder Melamin und deren Salze, wie Melaminborat. Solche Gase können auch als Treibmittel zur Verschäumung der Matrix bei der Brandtemperatur dienen.

Als Stabilisatoren haben sich auch Substanzen bewährt, die bei der Brandtemperatur endotherm abreagieren, beispielsweise unter Bildung von Wasser, wie beispielsweise Aluminiumhydroxid.

Materialien zur Ausbildung eines ablativen und/oder intumeszierenden Polyurethanschaums sind dem Fachmann bekannt und beispielsweise in den folgenden Druckschriften offenbart, auf die hiermit ausdrücklich Bezug genommen sei: DE 30 25 309 A1. DE 30 41 731 A1, DE 33 02 416 A1, DE 34 11 327 A1, EP 0 043 952 B1, EP 0 051 106 B1, EP 0 061 024 B1, EP 0 116 846 B1, EP 0 158 165 B1, EP 0 274 068 A2, EP 1 347 549 A1, EP 1 641 895 B1 und DE 196 53 503 A1.

Gemäß einer bevorzugten Ausführungsform des erfindungsgemäßen komprimierbaren Weichschotts sind die Enden der Mineralfasern bis zu einer Tiefe von 1 bis 10 mm in das Material der funktionellen Deckschicht(en) eingebettet, während die Dicke der von den Enden der Mineralfasern freien funktionellen Deckschicht(en) 1 bis etwa 20 mm oder mehr beträgt.

Die Mineralfasern können aus Steinfasern, Keramikfasern und/oder Glasfasern bestehen.

Gegenstand der Erfindung ist weiterhin ein Verfahren zur Herstellung des erfindungsgemäßen komprimierbaren Weichschotts, welches dadurch gekennzeichnet ist, dass man Mineralfasern mit einer der angestrebten Dicke des Weichschotts entsprechenden Länge unter Bildung einer Mineralfaserplatte derart in eine Form einbringt, dass die Mineralfasern der Mineralfaserplatte im Wesentlichen parallel zueinander und senkrecht zur Ebene der großen Oberflächen der Mineralfaserplatte angeordnet sind und die Mineralfaserplatte eine Dichte von weniger als 100 kg/m³ aufweist, dann eine Mischung zur Bildung des ablative und/oder intumeszierende Additive enthaltenden verbundbildenden Trägers auf die große Oberfläche der Mineralfaserplatte aufbringt, die Form hermetisch verschließt und die Mischung unter Bildung der funktionellen Deckschichten aus dem ablative und/oder intumeszierende Additive enthaltenden verbundbildenden Träger unter Druck in die Mineralfasern einpresst.

Gemäß einer bevorzugten Ausführungsform dieses Verfahrens bringt man Mineralfasern mit einer der angestrebten Dicke des Weichschotts entsprechenden Länge unter Bildung einer Mineralfaserplatte derart in eine Form ein, dass die Mineralfasern der Mineralfaserplatte im Wesentlichen parallel zueinander und senkrecht zur Ebene der großen Oberflächen der Mineralfaserplatte angeordnet sind und die Mineralfaserplatte eine Dichte von weniger als 100 kg/m³ aufweist, bringt dann eine Mischung zur Bildung eines ablativen und/oder intumeszierenden Polyurethanschaums auf die große Oberfläche der Mineralfaserplatte auf, verschließt die Form hermetisch und schäumt die Mischung unter Bildung funktionellen Deckschicht aus einem ablativen und/oder intumeszierenden Polyurethanschaum auf.

Wenn das komprimierbare Weichschott auf beiden großen Oberflächen mit der funktionellen Deckschicht versehen werden soll, entnimmt man das in dieser Weise erhaltene einseitig beschichtete komprimierbare Weichschott aus der Form, dreht es um, bringt es wieder in die Form ein und versieht es auf der zweiten großen Oberfläche in gleicher Weise mit der ablativen und/oder intumeszierenden Beschichtung. Dabei kann in Abhängigkeit von der angestrebten Dicke der von den Enden der Mineralfasern freien funktionellen Deckschicht eine entsprechend höhere Form benutzt werden.

Gegenstand der Erfindung ist weiterhin die Verwendung des oben beschriebenen komprimierbaren Weichschotts zur brandsicheren Abschottung von Rohr- und Kabeldurchführungen in Wänden, Decken und Böden von Gebäuden.

Das erfindungsgemäße komprimierbare Weichschott zeichnet sich dadurch aus, dass der Schäum- und Beschichtungsvorgang derart gesteuert werden kann, dass der Schaum einerseits tief in die Faserstruktur eindringt und andererseits eine definierte Deckschicht mit beliebiger Dicke von 1 bis > 20 mm ausbildet. Bei Systemen mit funktionellen Deckschichten auf beiden Seiten entsteht in dieser Weise eine stabile Platte, die aufgrund der geringen Dichte von weniger als 100 kg/m³ und des bevorzugt eingesetzten flexiblen Polyurethanweichschaums komprimierbar ist und ohne weiteres ohne Abplatzen der funktionellen Deckschichten zugeschnitten und in die zu verschließenden Öffnungen eingepresst werden kann und ohne dass es notwenig ist, die Schnittkanten für den Einbau zusätzlich zu beschichten, wie es mit herkömmlichen Brandschutzschotts dieser Art erforderlich war.

Das erfindungsgemäße Verfahren sei im Folgenden anhand der beigefügten Zeichnung näher erläutert, ohne dass die Erfindung auf diese besondere Ausführungsform eingeschränkt sein soll.

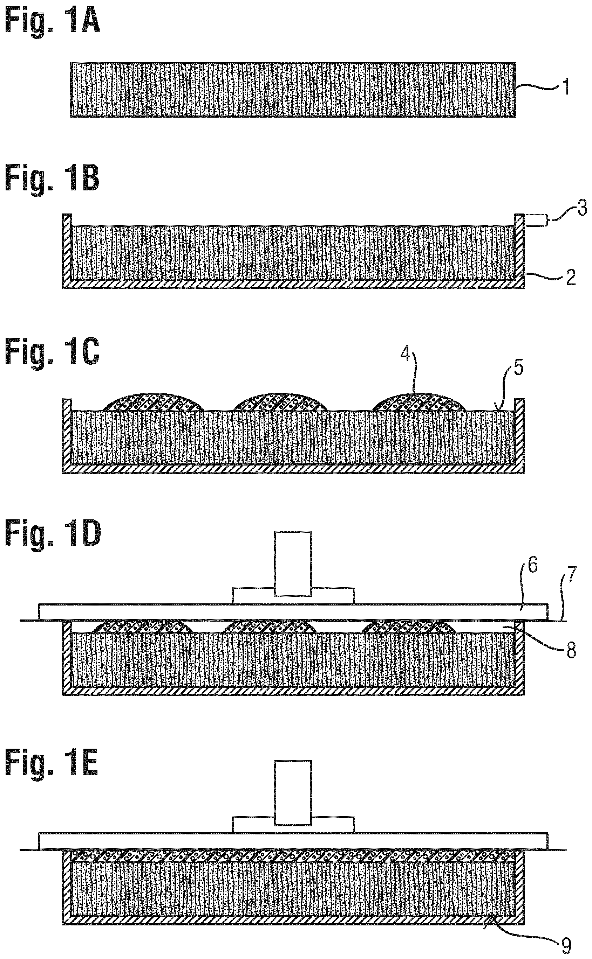

Die beigefügte Zeichnung zeigt in den Fig. 1A bis 1E schematische Schnittdarstellungen durch die Mineralfaserplatte bzw. die für die Fertigung des Weichschotts verwendete Form im Verlaufe der verschiedenen Verfahrensschritte.

Aufgrund der üblicherweise angewandten Fertigungsverfahren für Mineralfaserplatten sind im Handel keine Mineralfaserplatten erhältlich mit der Faserorientierung, wie sie für das erfindungsgemäße Verfahren erforderlich ist. Demzufolge werden bei der nachfolgend beschriebenen bevorzugten Ausführungsform des erfindungsgemäßen Verfahrens handelsübliche Mineralfaserplatten in Streifen aufgetrennt und in der Weise zusammengesetzt, dass eine Mineralfaserplatte erhalten wird, bei der die Mineralfasern im Wesentlichen parallel zueinander und senkrecht zur Ebene der großen Oberfläche der Mineralfaserplatte angeordnet sind, wie es in der Fig. 1A mit der Bezugsziffer 1 dargestellt ist.

Die in dieser Weise erhaltenen Mineralfaserstreifen mit einer Dichte von 60 kg/m³ werden zugeschnitten und in eine Form mit den Abmessungen 40 x 60 cm eingepasst (Fig. 1B).

Dabei ist die Länge der Mineralfasern derart abgemessen, dass sich zwischen der Oberfläche der Mineralfaserplatte 1 und der Oberkante der Form 2 ein Abstand 3 von 4 mm ergibt. Anschließend wird eine Zweikomponenten-Polyurethanschäummasse unter Ausbildung eines intumeszierenden Polyurethanschaums (Hilti Basis CP660 oder Fomox® der Firma Bayer) angemischt und gleichmäßig in Form von mehreren Auftragspunkten 4 auf der Oberfläche 5 der Mineralfaserplatte 1 angeordnet (Fig. 1C). Anschließend wird die Form mit dem Deckel 6, der mit einem Trennpapier 7 versehen ist, verschlossen (Fig. 1D), sodass der Spalt 8 zwischen der großen Oberfläche 5 der Mineralfaserplatte 1 komplett ausgeschäumt wird (Fig. 1E). Dabei dringt der Schaum je nach Viskosität und Reaktionsgeschwindigkeit bis zu 10 mm in die Oberfläche der Mineralfaserplatte ein. Die Polymerisations- und Aufschäumreaktion der Zweikomponenten-Polyurethanschäummasse erfolgt gegebenenfalls unter erhitzen.

Nach 5 bis 10 Minuten wird die Platte aus der Form 2 entnommen und die zweite große Oberfläche 9 in gleicher Weise mit einer funktionellen Deckschicht aus dem ablativen und/oder intumeszierenden Polyurethanschaum versehen.

Es ist für den Fachmann ohne weiteres ersichtlich, dass die Herstellung des erfindungsgemäßen komprimierbaren Weichschotts auch in andersartiger Weise erfolgen kann, wobei wesentlich ist, dass die Mineralfasern in der angegebenen Weise angeordnet sind und auf der großen Oberfläche der Mineralfaserplatte mit der funktionellen Deckschicht versehen werden. Dabei könnte bei einem automatisierten Fertigungsverfahren der Deckel 6 der Form 2 derart ausgebildet werden, dass das Trennpapier 7 angesaugt wird und nach der Aushärtung des Schaums für den weiteren Transport auf der mit der funktionellen Deckschicht versehenen Mineralfaserplatte verbleibt.

## Patentansprüche

1. Komprimierbares Weichschott mit einem Kern aus einer Mineralfaserplatte (1) und funktionellen Deckschichten in Form einer ablativen und/oder intumeszierenden Beschichtung auf mindestens einer der großen Oberflächen der Mineralfaserplatte, **dadurch gekennzeichnet, dass** die Mineralfasern der Mineralfaserplatte im Wesentlichen parallel zueinander und senkrecht zur Ebene der großen Oberflächen der Mineralfaserplatte angeordnet sind, dass die Mineralfaserplatte eine Dichte von weniger als 100 kg/m³ aufweist und dass die funktionellen Deckschichten aus einem ablative und/oder intumeszierende Additive enthaltenden verbundbildenden Träger gebildet sind, in den die Enden der Mineralfasern eingebettet sind.

2. Komprimierbares Weichschott nach Anspruch 1, **dadurch gekennzeichnet, dass** die Hauptachsen der Mineralfasern der Mineralfaserplatte in einem Bereich von 90 ± 20° zur Ebene der großen Oberflächen der Mineralfaserplatte verlaufen.

3. Komprimierbares Weichschott nach Anspruch 1 oder 2, **dadurch gekennzeichnet, dass** die Mineralfaserplatte eine Dichte von 50 bis 90 kg/m³ aufweist.

4. Komprimierbares Weichschott nach mindestens einem der Ansprüche 1 bis 3, **dadurch gekennzeichnet, dass** die funktionellen Deckschichten aus einem verbundbildenden Träger ausgewählt aus der Polyurethane, Phenolharze, Polystyrole, Polyolefine, wie Polyethylen und/oder Polybutylen, Melaminharze, Melaminharzschäume, synthetischen oder natürlichen Kautschuk, Cellulose, Elastomere und Gemische davon umfassenden Gruppe gebildet sind.

5. Komprimierbares Weichschott nach mindestens einem der Ansprüche 1 bis 4, **dadurch gekennzeichnet, dass** die funktionellen Deckschichten als verbundbildenden Träger einen Polyurethanschaum auf der Grundlage einer Polyolkomponente, einer Polyisocyanatkomponente, eines oder mehrerer Katalysatoren für die Reaktion des Polyols mit dem Polyisocyanat und eines chemischen Treibmittels und/oder physikalischen Treibmittels aufweisen.

6. Komprimierbares Weichschott nach Anspruch 5, **dadurch gekennzeichnet, dass** die funktionellen Deckschichten als verbundbildenden Träger einen flexiblen Polyurethanschaum aufweisen.

7. Komprimierbares Weichschott nach Anspruch 6, **dadurch gekennzeichnet, dass** die funktionellen Deckschichten als verbundbildenden Träger einen flexiblen Polyurethanweichschaum aufweisen.

8. Komprimierbares Weichschott nach mindestens einem der Ansprüche 1 bis 7, **dadurch gekennzeichnet, dass** die funktionellen Deckschichten als ablatives Additiv ein bei der Brandtemperatur wasserabgebendes anorganisches Hydroxid oder Hydrat enthalten.

9. Komprimierbares Weichschott nach Anspruch 8, **dadurch gekennzeichnet, dass** die funktionellen Deckschichten als ablatives Additiv kristallwasserhaltiges Aluminiumhydroxid und/oder Magnesiumhydroxid enthalten.

10. Komprimierbares Weichschott nach mindestens einem der Ansprüche 1 bis 9, **dadurch gekennzeichnet, dass** die funktionellen Deckschichten als intumeszierendes Additiv ein intumeszierendes Material auf der Grundlage eines Säurebildners, einer Kohlenstoff liefernden Verbindung und eines Gasbildners, Blähgraphit, Perlit, ein wasserhaltiges Alkalisilikat und/oder Vermiculit enthalten.

11. Komprimierbares Weichschott nach Anspruch 10, **dadurch gekennzeichnet, dass** das intumeszierende Material als Säurebildner, ein Salz oder ein Ester einer anorganischen, nichtflüchtigen Säure ausgewählt aus Schwefelsäure, Phosphorsäure und Borsäure, als Kohlenstoff liefernde Verbindung eine Polyhydroxyverbindung und/oder ein thermoplastisches oder duroplastisches polymeres Harzbindemittel und als Gasbildner ein Chlorparaffin, Melamin, eine Melaminverbindung, Tris(hydroxyethyl)-cyanurat, Cyanamid, Dicyanamid, Dicyandiamid, Biguanidin und/oder ein Guanidinsalz umfasst.

12. Komprimierbares Weichschott nach mindestens einem der vorhergehenden Ansprüche, **dadurch gekennzeichnet, dass** die funktionellen Deckschichten 2 bis 50 Gew.-% des ablativen und/oder intumeszierenden Additivs, bezogen auf die Gesamtmasse der funktionellen Deckschichten, enthalten.

13. Komprimierbares Weichschott nach mindestens einem der vorhergehenden Ansprüche, **dadurch gekennzeichnet, dass** die funktionellen Deckschichten 0 bis 30 Gew.-%, mindestens eines Matrixstabilisators, bezogen auf die Gesamtmasse der funktionellen Deckschichten, enthalten.

14. Komprimierbares Weichschott nach Anspruch 13, **dadurch gekennzeichnet, dass** der verbundbildende Träger als Matrixstabilisator einen anorganischen Füllstoff und/oder einen bei Brandtemperatur verkohlenden, verglasenden, keramisierenden und/oder endotherm abreagierenden Stoff enthält.

15. Komprimierbares Weichschott nach Anspruch 14, **dadurch gekennzeichnet, dass** der verbundbildende Träger als Matrixstabilisator einen Krustenbildner oder Glasbildner, ein Borat, ein niedrig schmelzendes Silikat, ein Alkalimetall- oder Erdalkalimetalloxid, -hydroxid oder -carbonat, ein wasserhaltiges Salz, ein hydraulisch abbindendes Erdalkalialumosilikat und/oder Gips enthält.

16. Komprimierbares Weichschott nach mindestens einem der vorhergehenden Ansprüche, **dadurch gekennzeichnet, dass** die Enden der Mineralfasern bis zu einer Tiefe von 1 bis 10 mm in das Material der funktionellen Deckschicht(en) eingebettet sind und die die Dicke der von den Enden der Mineralfasern freien funktionellen Deckschicht(en) 1 bis > 20 mm beträgt.

17. Komprimierbares Weichschott nach mindestens einem der vorhergehenden Ansprüche, **dadurch gekennzeichnet, dass** die Länge der Mineralfasern der Dicke des Weichschotts, abzüglich der Dicke der von den Enden der Mineralfasern freien funktionellen Deckschicht(en) entsprechen.

18. Komprimierbares Weichschott nach mindestens einem der vorhergehenden Ansprüche, **dadurch gekennzeichnet, dass** die Mineralfasern aus Steinfasern, Keramikfasern und/oder Glasfasern bestehen.

19. Verfahren zur Herstellung des komprimierbaren Weichschotts nach mindestens einem der vorhergehenden Ansprüche, **dadurch gekennzeichnet, dass** man Mineralfasern mit einer der angestrebten Dicke des Weichschotts entsprechenden Länge unter Bildung einer Mineralfaserplatte derart in eine Form einbringt, dass die Mineralfasern der Mineralfaserplatte im Wesentlichen parallel zueinander und senkrecht zur Ebene der großen Oberflächen der Mineralfaserplatte angeordnet sind und die Mineralfaserplatte eine Dichte von weniger als 100 kg/m³ aufweist, dann eine Mischung zur Bildung des ablative und/oder intumeszierende Additive enthaltenden verbundbildenden Trägers auf die große Oberfläche der Mineralfaserplatte aufbringt, die Form hermetisch verschließt und die Mischung unter Bildung der funktionellen Deckschichten aus dem ablative und/oder intumeszierende Additive enthaltenden verbundbildenden Träger unter Druck in die Mineralfasern einpresst.

20. Verfahren zur Herstellung des komprimierbaren Weichschotts nach Anspruch 19, **dadurch gekennzeichnet, dass** der eines ablativen und/oder intumeszierenden verbundbildende Träger ein Polyurethanschaum ist, wobei man eine Mischung zur Bildung des Polyurethanschaums auf die große Oberfläche der Mineralfaserplatte aufbringt, die Form hermetisch verschließt und die Mischung unter Bildung einer funktionellen Deckschicht aus einem ablativen und/oder intumeszierenden Polyurethanschaum aufschäumt.

21. Verfahren nach Anspruch 19 oder 20, **dadurch gekennzeichnet, dass** man das komprimierbare Weichschott aus der Form entnimmt, umdreht, in die Form einbringt und die zweite große Oberfläche in gleicher Weise mit der ablativen und/oder intumeszierenden Beschichtung versieht.

22. Verwendung des komprimierbaren Weichschotts nach den Ansprüchen 1 bis 18 zur brandsicheren Abschottung von Rohr- und Kabeldurchführungen in Wänden, Decken und Böden von Gebäuden.

## Claims

1. Compressible soft seal comprising a core consisting of a mineral fibre board (1) and functional outer layers in the form of an ablative and/or intumescent coating on at least one of the large surfaces of the mineral fibre board, **characterised in that** the mineral fibres of the mineral fibre board are arranged substantially parallel to one another and perpendicularly to the plane of the large surfaces of the mineral fibre board, that the mineral fibre board has a density of less than 100 kg/m³ and that the functional outer layers are formed of a composite-forming carrier containing ablative and/or intumescent additives in which the ends of the mineral fibres are embedded.

2. Compressible soft seal according to claim 1, **characterised in that** the main axes of the mineral fibres of the mineral fibre board extend within a range of 90 ± 20° relative to the plane of the large surfaces of the mineral fibre board.

3. Compressible soft seal according to claim 1 or claim 2, **characterised in that** the mineral fibre board has a density of 50 to 90 kg/m³.

4. Compressible soft seal according to at least one of claims 1 to 3, **characterised in that** the functional outer layers are formed of a composite-forming carrier selected from the group including polyurethanes, phenolic resins, polystyrenes, polyolefins, such as polyethylene and/or polybutylene, melamine resins, melamine foams, synthetic or natural rubber, cellulose, elastomers and mixtures thereof.

5. Compressible soft seal according to at least one of claims 1 to 4, **characterised in that** the functional outer layers comprise a polyurethane foam based on a polyol component, a polyisocyanate component, one or more catalysts for reacting the polyol with the polyisocyanate and a chemical blowing agent and/or physical blowing agent as the composite-forming carrier.

6. Compressible soft seal according to claim 5, **characterised in that** the functional outer layers comprise a flexible polyurethane foam as the composite-forming carrier.

7. Compressible soft seal according to claim 6, **characterised in that** the functional outer layers comprise a soft flexible polyurethane foam as the composite-forming carrier.

8. Compressible soft seal according to at least one of claims 1 to 7, **characterised in that** the functional outer layers contain an inorganic hydroxide or hydrate releasing water at fire temperature as the ablative additive.

9. Compressible soft seal according to claim 8, **characterised in that** the functional outer layers contain aluminium hydroxide and/or magnesium hydroxide containing water of crystallisation as the ablative additive.

10. Compressible soft seal according to at least one of claims 1 to 9, **characterised in that** the functional outer layers contain an intumescent material based on an acid former, a carbon-supplying compound and a gas former, expandable graphite, perlite, an aqueous alkali silicate and/or vermiculite as the intumescent additive.

11. Compressible soft seal according to claim 10, **characterised in that** the intumescent material includes a salt or an ester of an inorganic, non-volatile acid selected from sulphuric acid, phosphoric acid and boric acid as the acid former, a polyhydroxy compound and/or a thermoplastic or thermoset polymeric resin binder as the carbon-supplying compound and a chlorinated paraffin, melamine, a melamine compound, tris(hyroxyethyl)-cyanurate, cyanamide, dicyanamide, dicyandiamide, biguanidine and/or a guanidine salt as the gas former.

12. Compressible soft seal according to at least one of the preceding claims, **characterised in that** the functional outer layers contain 2 to 50 % by weight of the ablative and/or intumescent additive in relation to the total weight of the functional outer layers.

13. Compressible soft seal according to at least one of the preceding claims, **characterised in that** the functional outer layers contain 0 to 30 % by weight of at least one matrix stabiliser in relation to the total weight of the functional outer layers.

14. Compressible soft seal according to claim 13, **characterised in that** the composite-forming carrier contains an inorganic filler and/or a substance forming carbon, glass or ceramics and/or reacting endothermically at fire temperature as the matrix stabiliser.

15. Compressible soft seal according to claim 14, **characterised in that** the composite-forming carrier contains a crust former or glass former, a borate, a low-melting silicate, an alkali metal or alkaline earth metal oxide, hydroxide or carbonate, an aqueous salt, a hydraulic alkaline earth alumosilicate and/or gypsum as the matrix stabiliser.

16. Compressible soft seal according to at least one of the preceding claims, **characterised in that** the ends of the mineral fibres are embedded in the material of the functional outer layer(s) by up to a depth of to 1 to 10 mm and the thickness of the functional outer layer(s) free of the ends of the mineral fibres is 1 to > 20 mm.

17. Compressible soft seal according to at least one of the preceding claims, **characterised in that** the length of the mineral fibres corresponds to the thickness of the soft seal minus the thickness of the functional outer layer(s) free of the ends of the mineral fibres.

18. Compressible soft seal according to at least one of the preceding claims, **characterised in that** the mineral fibres consist of rock fibres, ceramic fibres and/or glass fibres.

19. Method of producing the compressible soft seal according to at least one of the preceding claims, **characterised in that** mineral fibres having a length corresponding to the desired thickness of the soft seal are introduced into a mould so as to form a mineral fibre board in such a manner that the mineral fibres of the mineral fibre board are arranged substantially parallel to one another and perpendicularly to the plane of the large surfaces of the mineral fibre board and the mineral fibre board has a density of less than 100 kg/m³, then a mixture for forming the composite-forming carrier containing ablative and/or intumescent additives is applied to the large surface of the mineral fibre board, the mould is hermetically sealed and the mixture is pressed into the mineral fibres under pressure so as to form the functional outer layers consisting of the composite-forming carrier containing ablative and/or intumescent additives.

20. Method of producing the compressible soft seal according to claim 19, **characterised in that** the composite-forming carrier containing ablative and/or intumescent additives is a polyurethane foam, wherein a mixture for forming the polyurethane foam is applied to the large surface of the mineral fibre board, the mould is hermetically sealed and the mixture is foamed so as to form a functional outer layer consisting of an ablative and/or intumescent polyurethane foam.

21. Method according to claim 19 or claim 20, **characterised in that** the compressible soft seal is removed from the mould, rotated, introduced into the mould and then the second large surface is provided with the ablative and/or intumescent coating in the same manner.

22. Use of the compressible soft seal according to claims 1 to 18 for firestopping pipe and cable lead-throughs in walls, ceilings and floors of buildings.

## Revendications

1. Cloison souple comprimable comportant un noyau constitué d'une plaque de fibres minérales (1) et de couches externes fonctionnelles ayant la forme d'un revêtement ablatif et/ou intumescent sur au moins l'une des surfaces majeures de la plaque de fibres minérales, **caractérisée en ce que** les fibres minérales de la plaque de fibres minérales sont agencées de manière sensiblement parallèle les unes aux autres et perpendiculaire au plan des surfaces majeures de la plaque de fibres minérales, **en ce que** la plaque de fibres minérales a une densité inférieure à 100 kg/m³ et **en ce que** les couches externes fonctionnelles sont formées à partir de supports formant des structures composites et contenant des additifs ablatifs et/ou intumescents, dans lesquels les extrémités des fibres minérales sont incorporées.

2. Cloison souple comprimable selon la revendication 1, **caractérisée en ce que** les axes principaux des fibres minérales de la plaque de fibres minérales s'étendent dans une zone de 90 ± 20° par rapport au plan des surfaces majeures de la plaque de fibres minérales.

3. Cloison souple comprimable selon la revendication 1 ou 2, **caractérisée en ce que** la plaque de fibres minérales a une densité de 50 à 90 kg/m³.

4. Cloison souple comprimable selon au moins une des revendications 1 à 3, **caractérisée en ce que** les couches externes fonctionnelles sont formées à partir d'un support formant des structures composites choisi parmi du polyuréthane, des résines phénoliques, des polystyrènes, des polyoléfines telles qu'un polyéthylène et/ou un polybutylène, des résines de mélamine, des mousses de résine de mélamine, un caoutchouc synthétique ou naturel, une cellulose, des élastomères et des groupes comportant des mélanges de ceux-ci.

5. Cloison souple comprimable selon au moins une des revendications 1 à 4, **caractérisée en ce que** les couches externes fonctionnelles comportent, en tant que support formant des structures composites, une mousse de polyuréthane basé sur un composant polyol, un composant polyisocyanate, un ou plusieurs catalyseurs pour la réaction du polyol avec le polyisocyanate et un agent d'expansion chimique et/ou un agent d'expansion physique.

6. Cloison souple comprimable selon la revendication 5, **caractérisée en ce que** les couches externes fonctionnelles faisant office de support formant des structures composites comportent une mousse de polyuréthane souple.

7. Cloison souple comprimable selon la revendication 6, **caractérisée en ce que** les couches externes fonctionnelles faisant office de support formant des structures composites comportent une mousse molle de polyuréthane souple.

8. Cloison souple comprimable selon au moins une des revendications 1 à 7, **caractérisée en ce que** les couches externes fonctionnelles faisant office d'additif ablatif contiennent un hydroxyde ou un hydrate inorganique qui rejette de l'eau à la température de combustion.

9. Cloison souple comprimable selon la revendication 8, **caractérisée en ce que** les couches externes fonctionnelles faisant office d'additif ablatif contiennent un hydroxyde d'aluminium et/ou un hydroxyde de magnésium contenant de l'eau de cristallisation.

10. Cloison souple comprimable selon au moins une des revendications 1 à 9, **caractérisée en ce que** les couches externes fonctionnelles faisant office d'additif intumescent contiennent un matériau intumescent basé sur un générateur d'acide, un composé fournissant du carbone et un générateur de gaz, du graphite expansé, de la perlite, un silicate alcalin aqueux et/ou de la vermiculite.

11. Cloison souple comprimable selon la revendication 10, **caractérisée en ce que** le matériau intumescent faisant office de générateur d'acide comprend un sel ou un ester d'un acide inorganique non volatil choisi parmi l'acide sulfurique, l'acide phosphorique et l'acide borique, le matériau intumescent faisant office de composé fournissant du carbone comprend un composé polyhydroxy et/ou un liant résineux polymère thermoplastique ou duro-plastique, et le matériau intumescent faisant office de générateur de gaz comprend une paraffine chlorée, une mélanine, un composé de mélamine, un tris(hydroxyéthyl)-cyanurate, un cyanamide, un dicyanamide, un dicyandiamide, une biguanidine et/ou un sel de guanidine.

12. Cloison souple comprimable selon au moins une des revendications précédentes, **caractérisée en ce que** les couches externes fonctionnelles contiennent de 2 à 50 % en poids de l'additif ablatif et/ou intumescent, par rapport à la masse totale des couches externes fonctionnelles.

13. Cloison souple comprimable selon au moins une des revendications précédentes, **caractérisée en ce que** les couches externes fonctionnelles contiennent de 0 à 30 % en poids d'au moins un stabilisateur de matrice, par rapport à la masse totale des couches externes fonctionnelles.

14. Cloison souple comprimable selon la revendication 13, **caractérisée en ce que** le support formant des structures composites faisant office de stabilisateur de matrice contient une charge inorganique et/ou une matière qui se carbonise, se vitrifie, se céramise et/ou produit une réaction endotherme à la température de combustion.

15. Cloison souple comprimable selon la revendication 14, **caractérisée en ce que** le support formant des structures composites faisant office de stabilisateur de matrice contient un agent de formation de croûte ou un vitrifiant, un borate, un silicate à bas point de fusion, un oxyde, un hydroxyde ou un carbonate de métal alcalin ou alcalino-terreux, un sel aqueux, un aluminosilicate alcalino-terreux à prise hydraulique et/ou du gypse.

16. Cloison souple comprimable selon au moins une des revendications précédentes, **caractérisée en ce que** les extrémités des fibres minérales sont incorporées jusqu'à une profondeur de 1 à 10 mm dans le matériau de la (des) couche(s) externe(s) fonctionnelle(s), et l'épaisseur de la (des) couches externes fonctionnelle(s) exposée(s) aux extrémités des fibres minérales va de 1 à > 20 mm.

17. Cloison souple comprimable selon au moins une des revendications précédentes, **caractérisée en ce que** la longueur des fibres minérales correspond à l'épaisseur de la cloison souple, moins l'épaisseur de la (des) couche(s) externe(s) fonctionnelle(s) exposée(s) aux extrémités des fibres minérales.

18. Cloison souple comprimable selon au moins une des revendications précédentes, **caractérisée en ce que** les fibres minérales sont constituées de fibres de roche, de fibres de céramique et/ou de fibres de verre.

19. Procédé pour fabriquer la cloison souple comprimable selon au moins une des revendications précédentes, **caractérisé en ce que** des fibres minérales ayant une longueur correspondant à l'épaisseur souhaitée pour la cloison souple sont placées dans un moule en formant une plaque de fibres minérales, de sorte que les fibres minérales de la plaque de fibres minérales sont agencées de manière sensiblement parallèle les unes aux autres et perpendiculaire au plan des surfaces majeures de la plaque de fibres minérales et la plaque de fibres minérales a une densité inférieure à 100 kg/m³, puis un mélange est déposé sur la surface majeure de la plaque de fibres minérales afin de former le support formant des structures composites et contenant des additifs ablatifs et/ou intumescents, le moule est refermé hermétiquement et le mélange est mis sous pression dans les fibres minérales en formant les couches externes fonctionnelles constituées du support formant des structures composites et contenant des additifs ablatifs et/ou intumescents.

20. Procédé pour fabriquer la cloison souple comprimable selon la revendication 19, **caractérisé en ce que** le support formant des structures composites, ablatif et/ou intumescent, est une mousse de polyuréthane, dans lequel un mélange destiné à former la mousse de polyuréthane est appliqué sur la surface majeure de la plaque de fibres minérales, le moule est refermé hermétiquement et le mélange est amené à l'état de mousse en formant une couche externe fonctionnelle constituée d'une mousse de polyuréthane ablative et/ou intumescente.

21. Procédé selon la revendication 19 ou 20, **caractérisé en ce que** la cloison souple comprimable est retirée du moule, retournée, placée dans le moule et pourvue de la seconde surface majeure de la même manière que le revêtement ablatif et/ou intumescent.

22. Utilisation de la cloison souple comprimable selon les revendications 1 à 18 pour le cloisonnement de traversées de tuyaux et de câbles dans des murs, des plafonds et des corps de bâtiments afin d'assurer une protection contre l'incendie.
